# EUROPEAN PATENT APPLICATION

(11) **EP 4 797 547 A1**
(43) Date of publication of application: **26.08.2026**
(21) Application number: 24894355.7
(22) Date of filing: 26.09.2024
(51) Int. Cl.: H04B 1/3827, H01Q 1/27, H01Q 1/24, A44C 7/00, H01Q 5/307, H04W 88/06

(54) **EARRING COMPRISING ANTENNA**

(30) Priority: 21.11.2023 KR 20230162597; 03.01.2024 KR 20240000919
(71) Applicant: Samsung Electronics Co., Ltd., Suwon-si, Gyeonggi-do 16677 (KR)
(72) Inventor: LI, Hua, Suwon-si, Gyeonggi-do 16677 (KR); KIM, Jaehyung, Suwon-si, Gyeonggi-do 16677 (KR); KIM, Jongwon, Suwon-si, Gyeonggi-do 16677 (KR); KIM, Taegyu, Suwon-si, Gyeonggi-do 16677 (KR); YUN, Himchan, Suwon-si, Gyeonggi-do 16677 (KR); KIM, Jonghoon, Suwon-si, Gyeonggi-do 16677 (KR); MOON, Jesun, Suwon-si, Gyeonggi-do 16677 (KR); OH, Dongjun, Suwon-si, Gyeonggi-do 16677 (KR); LEE, Youngsung, Suwon-si, Gyeonggi-do 16677 (KR)
(74) Representative: HGF
(86) International application number: PCT/KR2024/014667
(87) International publication number: WO 2025/110459

(57) **Abstract**

According to an exemplary embodiment of the present disclosure, an earring is provided, the earring comprising: an accessory comprising a first conductive pattern; and an earring back comprising a wireless communication circuit configured to transmit and/or receive a signal of at least one designated frequency band through the first conductive pattern.

## Description

### [Technical Field]

The disclosure relates to an earring including an antenna.

### [Background Art]

Wearable devices (or wearable electronic devices) are smart devices that are wearable, and may take various forms such as glasses, watches, clothing, or accessories.

The above information may be provided as related art for the purpose of facilitating an understanding of the disclosure. No assertion or determination is made as to whether any of the foregoing may be regarded as prior art with respect to the disclosure.

### [Disclosure of Invention]

### [Technical Problem]

Wireless communication is expanding its scope to wearable devices and is becoming diversified. Wearable devices are provided in lightweight and compact forms so as to reduce inconvenience in wearing, which may make it difficult to design an antenna for wireless communication.

Various embodiments of the disclosure provide an earring including an antenna capable of securing and/or improving antenna radiation performance by overcoming antenna design constraints caused by miniaturization and weight reduction.

The technical problems to be solved by the disclosure are not limited to the technical problems mentioned above, and other technical problems not mentioned above will be understood by those skilled in the art to which the present disclosure pertains from the following description.

### [Solution to Problem]

According to an exemplary embodiment of the disclosure, an earring is provided, and the earring includes an accessory including a first conductive pattern, and an earring back including wireless communication circuitry configured to transmit and/or receive a signal in at least one frequency band through the first conductive pattern.

### [Advantageous Effects of Invention]

According to various embodiments of the disclosure, by utilizing, as a ground, a conductive connection member (e.g., a Hall IC FPCB) coupled to a housing (e.g., an antenna radiator) in a coupling structure, various frequency bands may be supported and antenna performance may be improved.

An earring including an antenna according to exemplary embodiments of the disclosure may secure and/or improve antenna radiation performance by overcoming antenna design constraints.

In addition, effects obtainable or expected from the various embodiments of the disclosure other than those described above will be directly or implicitly disclosed in the detailed description of the embodiments of the disclosure.

### [Brief Description of Drawings]

The above and other aspects, features, and advantages of certain embodiments of the disclosure will be more apparent from the following detailed description taken in conjunction with the accompanying drawings.
FIG. 1 illustrates a block diagram of an electronic device according to an embodiment of the disclosure in a network environment.
FIG. 2 illustrates a state in which an earring according to an embodiment of the disclosure is worn on an ear of a user.
FIG. 3 illustrates a perspective view of the earring according to an embodiment of the disclosure.
FIG. 4 illustrates a perspective view of a portion of the earring according to an embodiment of the disclosure, and a cross-sectional view of a portion of the earring taken along line B-B'.
FIG. 5 illustrates perspective views of a flexible conductor according to an embodiment of the disclosure.
FIG. 6 illustrates various views of the flexible conductor according to an embodiment of the disclosure.
FIG. 7 illustrates a perspective view of a portion of the earring according to an embodiment of the disclosure, and a cross-sectional view of a portion of the earring taken along line C-C'.
FIG. 8 illustrates a perspective view of a portion of an earring according to an embodiment of the disclosure, and a cross-sectional view of a portion of the earring taken along line D-D'.
FIG. 9 illustrates an earring according to an embodiment of the disclosure in a state in which an accessory and an earring back are separated, and graphs showing antenna radiation efficiency of the earring.
FIG. 10 illustrates the earring according to an embodiment of the disclosure in a state in which the accessory and the earring back are connected, and graphs showing antenna radiation efficiency of the earring.
FIG. 11 illustrates various forms of an earring according to various embodiments of the disclosure worn on an ear of a user, and graphs showing antenna radiation efficiency of the earring according to the forms thereof.
FIG. 12 illustrates earrings according to various embodiments of the disclosure.
FIG. 13 illustrates an earring 2 according to various embodiments of the disclosure.
FIG. 14 illustrates an earring 2 according to various embodiments of the disclosure.
FIG. 15 illustrates various forms of an earring according to various embodiments of the disclosure worn on an ear of a user, and graphs showing antenna radiation efficiency of the earring according to the forms thereof.
FIG. 16 illustrates an earring according to various embodiments of the disclosure.
FIG. 17 illustrates an earring according to various embodiments of the disclosure.

### [Mode for the Invention]

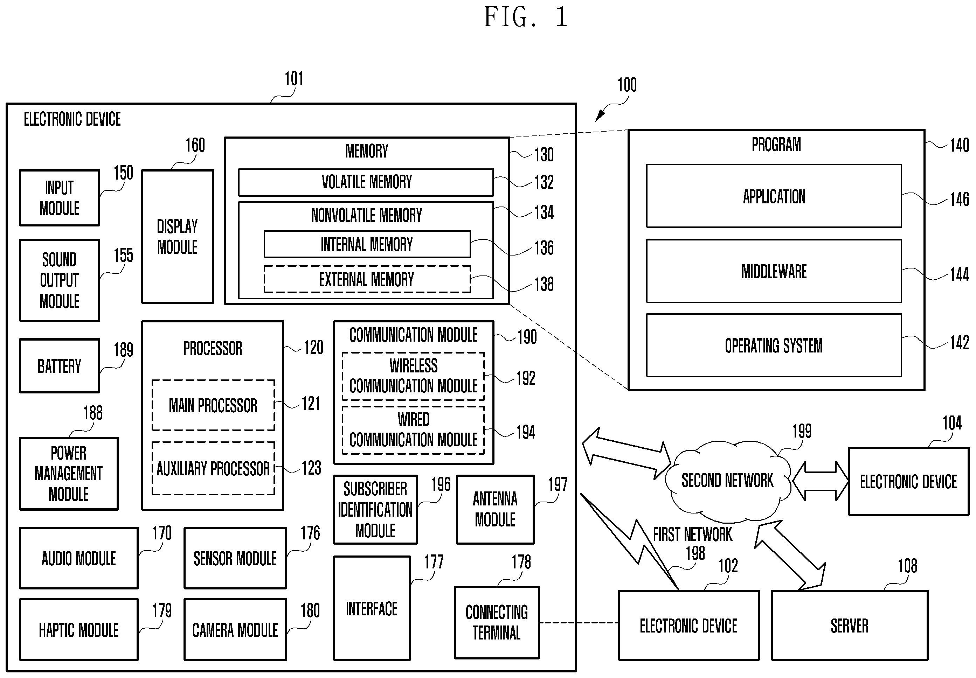

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

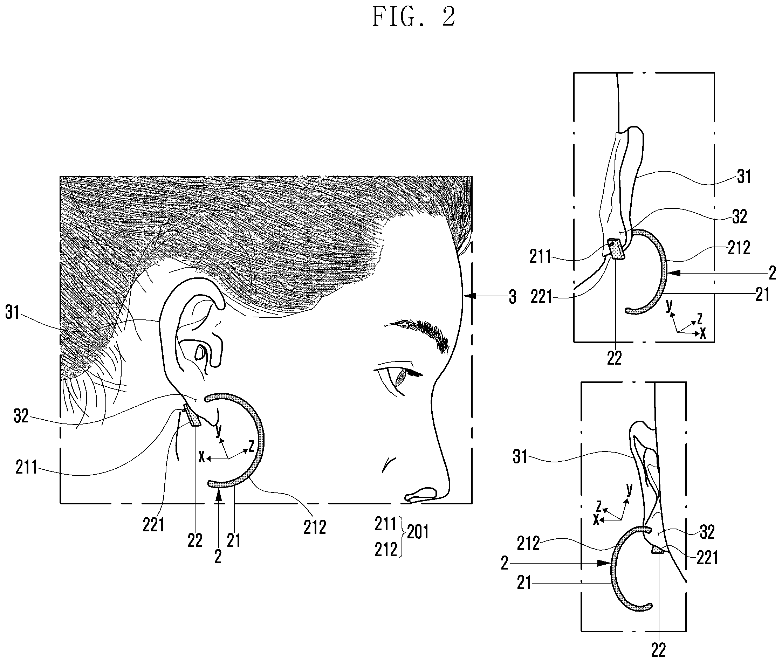

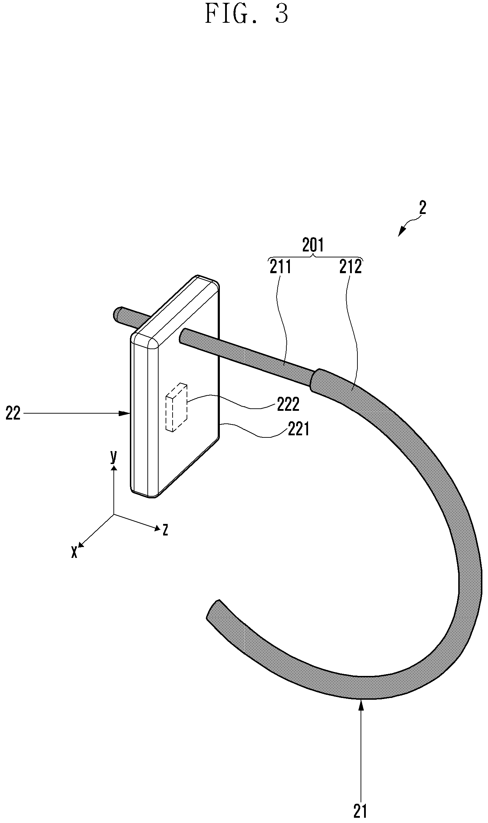

An electronic device according to an embodiment of the present disclosure may include a wearable electronic device (e.g., an earring) (e.g., the earring (200) of FIGs. 2 and 3).

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively," as "coupled with," "coupled to," "connected with," or "connected to" another element (e.g., a second element), it denotes that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

FIG. 2 illustrates a state in which an earring 2 according to an embodiment of the disclosure is worn on an ear 31 of a user 3. FIG. 3 illustrates a perspective view of the earring 2 according to an embodiment of the disclosure.

Referring to FIGS. 2 and 3, the earring 2 may be worn on an ear of a user as an ear wearable device including electrical components. The earring 2 may be, for example, the electronic device 101 of FIG. 1, or may include at least some of the components included in the electronic device 101 of FIG. 1.

According to an embodiment, the earring 2 may be a pierced earring wearable on the ear through a piercing. The term "piercing" may refer to the hole formed in an ear for wearing an earring 2, and may also be referred to as a piercing hole or a pierced hole. The position of the piercing may vary depending on a user's preference, and the earring 2 may be provided (or formed) in various shapes that do not deteriorate wearing comfort in correspondence with the position of the piercing.

According to an embodiment, the earring 2 may be worn on an earlobe 32 of an ear 31. The earring 2 may include an accessory (also referred to as an "ear accessory") 21 and an earring back 22. The accessory 21 may include a pin (also referred to as a "piercing pin" or a "pierced pin") 211 and a conductive member (also referred to as a "conductive portion") 212. The pin 211 may pass through a piercing of an earlobe 32. The conductive member 212 may extend from the pin 211 or may be physically and electrically connected to the pin 211. The conductive member 212 may be a substantive accessory member of the earring 2 for adorning the user. The conductive member 212 is not limited to the illustrated example and may be provided (or formed) in various shapes. In various embodiments, the accessory 21 may further include an additional accessory member disposed on, connected to, or coupled to the conductive member 212. The additional accessory member may be formed of various materials such as, for example, plastic, glass, jewelry, beads, or wood. The earring back 22 may be a structural element for securely fixing the accessory 21 to the ear 31. In an embodiment, the earring back 22 may be fastened to the pin 211 of the accessory 21 behind the earlobe 32. The earring back 22 may reduce or prevent the accessory 21 from being separated from the earlobe 32. The earring back 22 may also be referred to by various other terms such as "backing," "earring backing," "stopper," "earring stopper," "stud," "earring stud," or "support."

According to an embodiment, the pin 211 and the conductive member 212 of the accessory 21 may be provided (or formed) as an integrated or single structure (e.g., a single continuous structure or a complete structure).

According to an embodiment, a combination of the pin 211 and the conductive member 212 of the accessory 21 may be defined or interpreted as a first conductive pattern 201 included in the accessory 21.

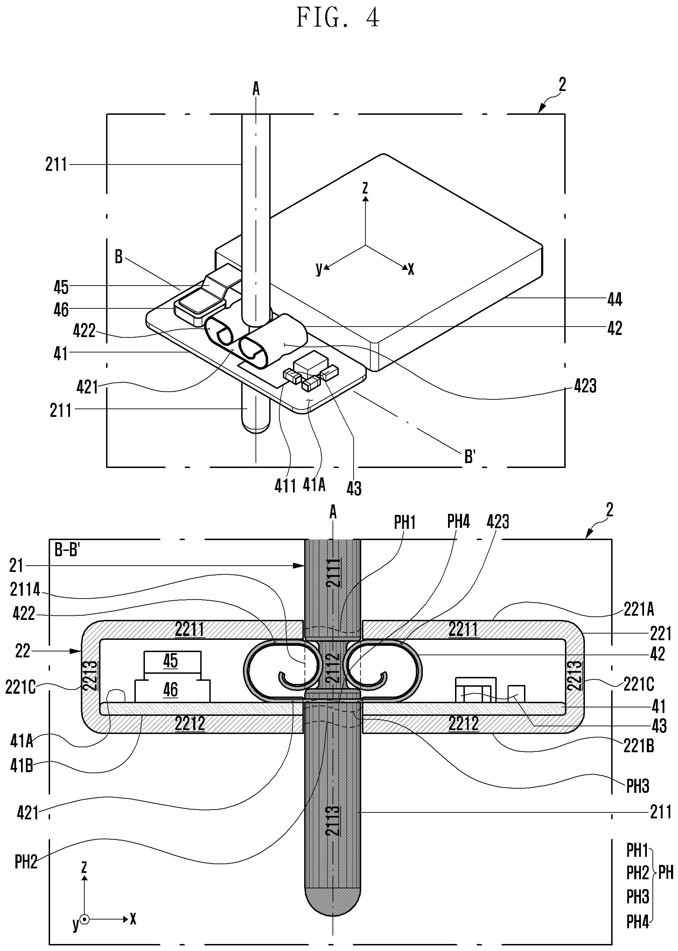

According to an embodiment, the earring back 22 may include a housing (also referred to as a "case" or an "exterior member") 221, and a flexible conductor (e.g., the flexible conductor 42 of FIG. 4) accommodated in the housing 221. The earring back 22 may include a pin hole. The pin 211 of the accessory 21 may pass through, for example, the housing 221 and the flexible conductor of the earring back 22 through the pin hole. The pin 211 of the accessory 21 may be detachably attached to the earring back 22 through the flexible conductor. The flexible conductor may elastically support the pin 211 of the accessory 21 passing through the earring back 22 through the pin hole so as to prevent the pin 211 from being separated from the earring back 22.

According to an embodiment, the earring back 22 may include wireless communication circuitry 222 accommodated in the housing 221. The wireless communication circuitry 222 may include, for example, the wireless communication module 192 of FIG. 1. The wireless communication circuitry 222 may include, for example, the communication processor (CP) of FIG. 1.

According to an embodiment, the wireless communication circuitry 222 may be electrically connected to the flexible conductor (e.g., the flexible conductor 42 of FIG. 4). The wireless communication circuitry 222 may provide (or feed) an electromagnetic signal (or a wireless signal, a radio frequency (RF) signal, or a radiation current) to the first conductive pattern 201 of the accessory 21 through the flexible conductor fastened to the pin 211 of the first conductive pattern 201 of the accessory 21. The first conductive pattern 201 may operate as an antenna radiator by receiving the electromagnetic signal from the wireless communication circuitry 222.

According to an embodiment, the wireless communication circuitry 222 included in the earring back 22 may be configured to transmit and/or receive a signal in at least one predetermined frequency band through the first conductive pattern 201 of the accessory 21. The predetermined frequency band may include, for example, a low band (LB) (about 600 MHz to about 1 GHz), a middle band (MB) (about 1 GHz to about 2.3 GHz), a high band (HB) (about 2.3 GHz to about 2.7 GHz), or an ultra-high band (UHB) (about 2.7 GHz to about 6 GHz). The at least one predetermined frequency band may include various other frequency bands in addition thereto.

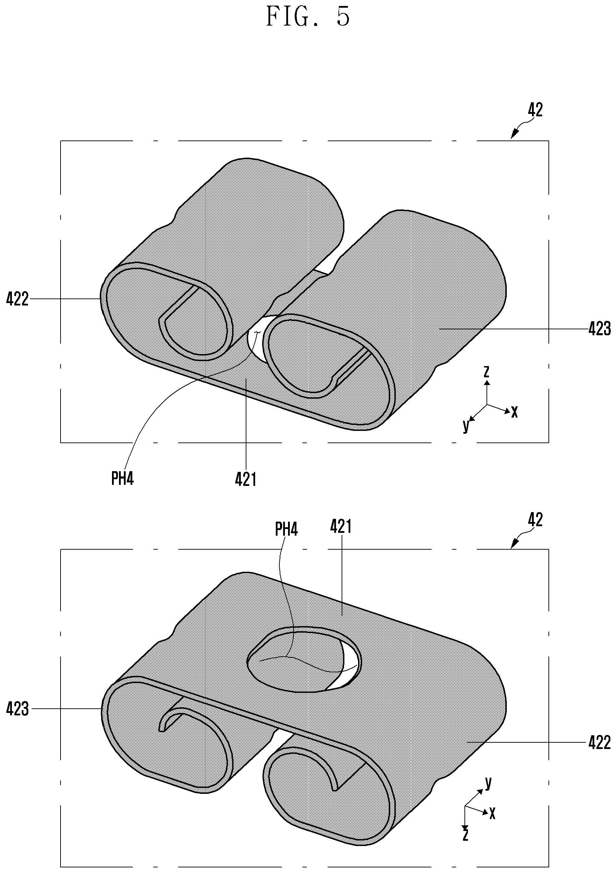

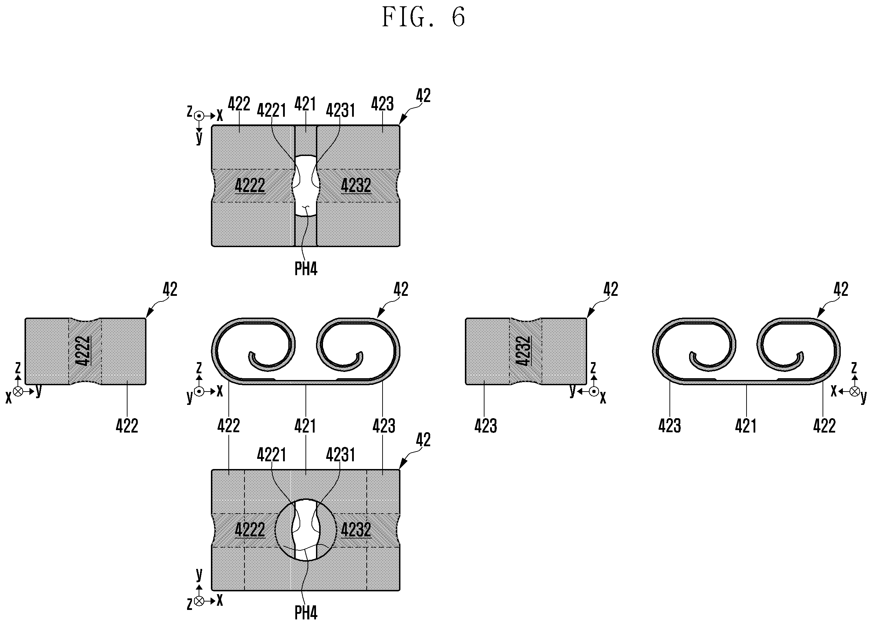

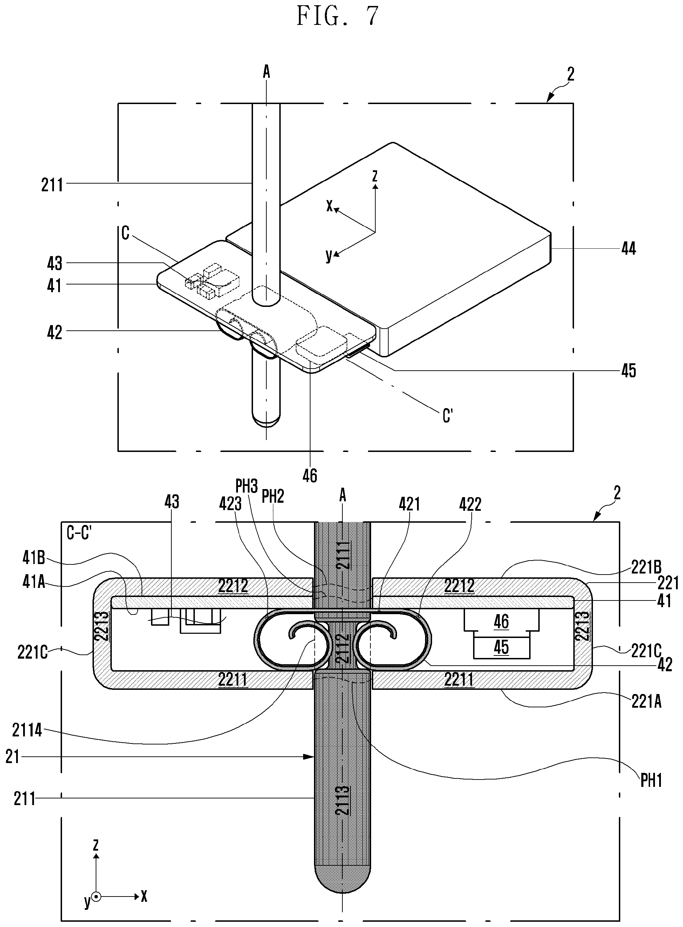

FIG. 4 illustrates a perspective view of a portion of an earring 2 according to an embodiment of the disclosure, and a cross-sectional view of a portion of the earring 2 taken along line B-B'. FIG. 5 illustrates perspective views of a flexible conductor 42 according to an embodiment of the disclosure. FIG. 6 illustrates various views of the flexible conductor 42 according to an embodiment of the disclosure. FIG. 7 illustrates a perspective view of a portion of the earring 2 according to an embodiment of the disclosure, and a cross-sectional view of a portion of the earring 2 taken along line C-C'.

Referring to FIGS. 4, 5, 6, and 7, the earring 2 may include an accessory 21 and an earring back 22.

According to an embodiment, the accessory 21 may include a pin 211. The pin 211 may be a cylinder having a circular cross section and extending along a substantially straight central axis A.

According to various embodiments, the pin 211 of the accessory 21 is not limited to a circular cross section and may be a cylinder having various cross-sectional shapes, such as an elliptical cross section or a polygonal cross section, that may be safely positioned in a piercing of an ear.

According to an embodiment, the earring back 22 may include a housing 221, a printed circuit board 41, a flexible conductor 42, a battery 44, and/or an electrical connection member 45.

According to an embodiment, the housing 221 may substantially provide (or form) the exterior of the earring back 22. The housing 221 may interfere with the ear 31 so that the earring 2 is not separated from the ear 31 while the earring 2 is worn on the ear 31.

According to an embodiment, the housing 221 may include a first surface 221A, a second surface 221B, and a side surface (also referred to as a "third surface") 221C. The first surface 221A may be oriented in a first direction. The second surface 221B may be oriented in a second direction opposite to the first direction. The side surface 221C may connect or extend between the first surface 221A and the second surface 221B so as to surround a space between the first surface 221A and the second surface 221B. The housing 221 may have an inner space among the first surface 221A, the second surface 221B, and the side surface 221C. Coordinate axes may be provided (or formed) based on the housing 221. For example, the +z-axis may be a direction in which the first surface 221A is oriented, and the first surface 221A may be included in an x-y plane.

According to an embodiment, the housing 221 may be provided (or formed) through a combination (or coupling) of a plurality of parts. The plurality of parts of the housing 221 may be coupled to each other through mechanical fastening such as screw fastening, or through bonding.

According to an embodiment, the housing 221 may include a first plate 2211, a second plate 2212, and a side surface portion (also referred to as a "side" or a "side wall") 2213. The first plate 2211 may provide (or form) the first surface 221A. The second plate 2212 may provide (or form) the second surface 221B. The side surface portion 2213 may provide (or form) the side surface 221C. In an embodiment, an integrated or single structure (e.g., a single continuous structure or a complete structure) including the second plate 2212 and the side surface portion 2213 may be provided (or formed). In various embodiments, an integrated or single structure including the first plate 2211 and the side surface portion 2213 may be provided (or formed). In various embodiments, a first integrated or single structure including the first plate 2211 and a portion of the side surface portion 2213, and a second integrated or single structure including the second plate 2212 and a remaining portion of the side surface portion 2213 may be provided (or formed). In the illustrated example, the housing 221 may have a hexahedral exterior, but is not limited thereto, and may be provided (or formed) in various shapes.

According to an embodiment, the housing 221 may include a first pin hole PH1 included in the first plate 2211 and a second pin hole PH2 included in the second plate 2212. The first pin hole PH1 and the second pin hole PH2 may be aligned in a direction of a central axis A of the pin 211 of the accessory 21. The pin 211 of the accessory 21 may pass through the housing 221 through the first pin hole PH1 and the second pin hole PH2.

According to an embodiment, the printed circuit board 41 may be accommodated in the housing 221. The printed circuit board 41 may be disposed or coupled to the second plate 2212. The printed circuit board 41 may be coupled to the second plate 2212 through mechanical fastening such as screw fastening, or through bonding. The printed circuit board 41 may include a rigid printed circuit board (PCB), a flexible PCB (FPCB), or a rigid-flex PCB (RFPCB).

According to an embodiment, the printed circuit board 41 may include a first board surface (also referred to as a "third surface") 41A and a second board surface (also referred to as a "fourth surface") 41B facing away from the first board surface 41A. The first board surface 41A may face the first plate 2211. The second board surface 41B may face the second plate 2212.

According to an embodiment, the printed circuit board 41 may include a third pin hole PH3. The third pin hole PH3 may be positioned between the first pin hole PH1 of the first plate 2211 and the second pin hole PH2 of the second plate 2212. The first pin hole PH1, the second pin hole PH2, and the third pin hole PH3 may be aligned in a direction of a central axis A of the pin 211 of the accessory 21. The pin 211 of the accessory 21 may pass through the housing 221 and the printed circuit board 41 through the first pin hole PH1, the second pin hole PH2, and the third pin hole PH3.

According to various embodiments, the printed circuit board 41 may be provided (or formed) in various forms, such as including a notch instead of the third pin hole PH3 so as not to interfere with the pin 211 of the accessory 21 passing through the earring back 22.

According to an embodiment, a flexible conductor (also referred to as a "flexible conductive member", a "conductive elastic body", or a "conductive elastic member") 42 may be disposed on the first board surface 41A of the printed circuit board 41. The flexible conductor 42 may elastically support the pin 211 of the accessory 21. The flexible conductor 42 may be fastened to the pin 211 so as to reduce or prevent the accessory 21 from being separated from the earring back 22.

According to an embodiment, the flexible conductor 42 may include a conductive structure (also referred to as a "conductor", a "metal structure," or a "metal body") including an elastic structure. The flexible conductor 42 may include a first portion 421, a second portion 422, and a third portion 423. The first portion 421 may be disposed or coupled to the first board surface 41A of the printed circuit board 41. The second portion 422 and the third portion 423 may extend from the first portion 421 and may be positioned opposite to each other. The second portion 422 and the third portion 423 may be supported by the first portion 421 so as to have elasticity. The second portion 422 and the third portion 423 may be supported by the first portion 421 so as to elastically support and press the pin 211 of the accessory 21.

According to an embodiment, the flexible conductor 42 may be formed by bending a metal plate (e.g., forming by applying a force to a material to cause plastic deformation and changing a shape of the material). The first portion 421 of the flexible conductor 42 (e.g., a conductive clip) may include, for example, a planar or flat portion at least partially parallel to the first board surface 41A of the printed circuit board 41. The second portion 422 of the flexible conductor 42 may include, for example, a first curved portion bent and extending from the first portion 421. The third portion 423 of the flexible conductor 42 may include a second curved portion bent and extending from the first portion 421.

According to an embodiment, the flexible conductor 42 may be provided (or formed) substantially symmetrically with respect to the pin 211 of the accessory 21. The second portion 422 and the third portion 423 of the flexible conductor 42 may be provided (or formed) substantially symmetrically with respect to the first portion 421.

According to an embodiment, the first portion 421 of the flexible conductor 42 may be disposed or coupled to the first board surface 41A of the printed circuit board 41 via a conductive adhesive material (or a conductive bonding material) such as solder. The first portion 421 may be physically and electrically connected to the printed circuit board 41 via the conductive adhesive material. The printed circuit board 41 may include a conductive pad (also referred to as a "conductive land" or a "conductive terminal") corresponding to the first portion 421. The first portion 421 may be disposed or coupled to the printed circuit board 41 via the conductive adhesive material disposed between the first portion 421 and the conductive pad.

According to an embodiment, the first portion 421 of the flexible conductor 42 may be physically and electrically connected to the printed circuit board 41 through mechanical fastening such as screw fastening.

According to an embodiment, the first portion 421 of the flexible conductor 42 may include a fourth pin hole PH4. The fourth pin hole PH4 may be positioned between the first pin hole PH1 of the first plate 2211 and the third pin hole PH3 of the printed circuit board 41. The first pin hole PH1, the second pin hole PH2, the third pin hole PH3, and the fourth pin hole PH4 may be aligned in a direction of the central axis A of the pin 211 of the accessory 21. The pin 211 of the accessory 21 may pass through the housing 221, the printed circuit board 41, and the flexible conductor 42 through the first pin hole PH1, the second pin hole PH2, the third pin hole PH3, and the fourth pin hole PH4. A combination of the first pin hole PH1, the second pin hole PH2, the third pin hole PH3, and the fourth pin hole PH4 may be referred to as a "pin hole PH" of the earring back 22. The pin 211 of the accessory 21 may be supported by the pin hole PH of the earring back 22 and may be stably positioned in the earring back 22.

According to an embodiment, through sliding between the pin 211 of the accessory 21 and the pin hole PH of the earring back 22, the pin 211 and the earring back 22 may be rotatable relative to each other with respect to the central axis A of the pin 211. In various embodiments, an interference structure between the pin 211 and the pin hole PH may be provided (or formed) so that relative rotation between the accessory and the earring back 22 with respect to the central axis A of the pin 211 is substantially difficult.

According to an embodiment, the pin 211 of the accessory 21 may include a fourth portion 2111, a fifth portion 2112, and a sixth portion 2113. The fourth portion 2111, the fifth portion 2112, and the sixth portion 2113 may be arranged in the direction of the central axis A of the pin 211. The fourth portion 2111 may be disposed between the conductive member 212 of the accessory 21 (see FIG. 3) and the fifth portion 2112. The fourth portion 2111 may extend from the conductive member 212 of the accessory 21 (see FIG. 3) or may be physically and electrically connected to the conductive member 212. The fifth portion 2112 may be disposed between the fourth portion 2111 and the sixth portion 2113, and may extend the fourth portion 2111 and the sixth portion 2113. The fourth portion 2111 and the sixth portion 2113 may have a first diameter. The fifth portion 2112 may have a second diameter smaller than the first diameter. Due to a difference in diameter between the fourth portion 2111 and the fifth portion 2112 and a difference in diameter between the sixth portion 2113 and the fifth portion 2112, the pin 211 may have a groove (also referred to as a "fastening groove") 2114. When the second portion 422 and the third portion 423 of the flexible conductor 42 are inserted into the groove 2114 of the pin 211 and are positioned with the fifth portion 2112 interposed therebetween, the flexible conductor 42 and the pin 211 may be fastened to each other due to interference between the second and third portions 422 and 423 and the groove 2114. When a relative position between the pin 211 and the earring back 22 is changed so that the accessory 21 and the earring back 22 are coupled to each other or separated from each other, the second and third portions 422 and 423 of the flexible conductor 42 may be elastically deformed between a first state in which the second and third portions 422 and 423 are positioned with the sixth portion 2113 interposed therebetween and a second state in which the second and third portions 422 and 423 are positioned in the groove 2114 with the fifth portion 2112 interposed therebetween.

According to an embodiment, the second portion 422 of the flexible conductor 42 may include a first curved surface 4221 provided (or formed) in a region configured to be brought into physical contact with the pin 211 of the accessory 21. When viewed in the direction of the central axis A of the pin 211, the first curved surface 4221 may have a shape corresponding to an outer circumferential surface of the pin 211 (e.g., a side surface of a cylinder). The third portion 423 of the flexible conductor 42 may include a second curved surface 4231 provided (or formed) in a region configured to be brought into physical contact with the pin 211 of the accessory 21. When viewed in the direction of the central axis A of the pin 211, the second curved surface 4231 may have a shape corresponding to an outer circumferential surface of the pin 211 (e.g., a side surface of a cylinder). When a relative position between the pin 211 and the earring back 22 is changed so that the accessory 21 and the earring back 22 are coupled to each other or separated from each other, the first curved surface 4221 and the second curved surface 4231 may improve stable support of the pin 211 by the flexible conductor 42.

According to an embodiment, the first curved surface 4221 included in the second portion 422 of the flexible conductor 42 may have a shape corresponding to an outer circumferential surface of the fifth portion 2112 of the pin 211 (e.g., a side surface of a cylinder). The second curved surface 4231 included in the third portion 423 of the flexible conductor 42 may have a shape corresponding to an outer circumferential surface of the fifth portion 2112 of the pin 211 (e.g., a side surface of a cylinder).

According to an embodiment, the flexible conductor 42 may include a first bending portion 4222 extending from the second portion 422 to the first portion 421 so that an elastic structure of the second portion 422 relative to the first portion 421 has improved durability. The first curved surface 4221 may be provided (or formed) by the first bending portion 4222. The flexible conductor 42 may include a second bending portion 4232 extending from the third portion 423 to the first portion 421 so that an elastic structure of the third portion 423 relative to the first portion 421 has improved durability. The second curved surface 4231 may be provided (or formed) by the second bending portion 4232.

According to various embodiments, the flexible conductor 42 is not limited to the illustrated example and may be provided (or formed) in a form including various other elastic structures detachable from and attachable to the pin 211 of the accessory 21.

According to an embodiment, the earring back 22 may be reversibly fastened to the pin 211 of the accessory 21. As illustrated in FIG. 4, the earring back 22 may be fastened to the pin 211 such that the fourth portion 2111 of the pin 211 protrudes with respect to the first surface 221A of the housing 221 and the sixth portion 2113 of the pin 211 protrudes with respect to the second surface 221B of the housing 221. As illustrated in FIG. 7, the earring back 22 may be fastened to the pin 211 such that the fourth portion 2111 of the pin 211 protrudes with respect to the second surface 221B of the housing 221 and the sixth portion 2113 of the pin 211 protrudes with respect to the first surface 221A of the housing 221.

According to an embodiment, a plurality of electronic components 43 may be disposed on the printed circuit board 41. At least some of the plurality of electronic components 43 may be disposed on the first surface 41A of the printed circuit board 41, but are not limited thereto and may be disposed on the second surface 41B of the printed circuit board 41. The plurality of electronic components 43 may include wireless communication circuitry (also referred to as a "wireless communication module") (e.g., the wireless communication circuitry 222 of FIG. 3). The wireless communication circuitry may be electrically connected to the flexible conductor 42. The printed circuit board 41 may include a conductive path 411 electrically connecting the wireless communication circuitry and the flexible conductor 42. The wireless communication circuitry may provide an electromagnetic signal (or a wireless signal, an RF signal, or a radiation current) to the conductive path 411. The first conductive pattern 201 of the accessory 21 (see FIG. 3) may be electrically connected to the flexible conductor 42 through fastening between the pin 211 and the flexible conductor 42, and the electromagnetic signal from the wireless communication circuitry may be provided (or fed) to the first conductive pattern 201 through the conductive path 411 and the flexible conductor 42. A combination of the conductive path 411 and the flexible conductor 42 may be defined or interpreted as, for example, a transmission line or a feeding line between the wireless communication circuitry and the first conductive pattern 201 (see FIG. 3). A combination of the conductive path 411 and the flexible conductor 42 may be defined or interpreted as, for example, a feeding portion. An electromagnetic signal may be provided (or fed) from the wireless communication circuitry to the first conductive pattern 201 (see FIG. 3), and an electromagnetic field (also referred to as a "radiation field") capable of transmitting and/or receiving a signal in at least one predetermined frequency band may be generated (or formed) through the first conductive pattern 201.

According to an embodiment, when the wireless communication circuitry (e.g., the wireless communication circuitry 222 of FIG. 3) provides (or feeds) an electromagnetic signal (or a wireless signal, an RF signal, or a radiation current) to the first conductive pattern 201 (see FIG. 3), a signal path through which the electromagnetic signal flows in the first conductive pattern 201 may be formed. When an electromagnetic signal is provided (or fed) from the wireless communication circuitry to the first conductive pattern 201, an electromagnetic field (or a beam pattern or a radiation pattern) may be provided (or formed) through the signal path. The first conductive pattern 201 may have a physical length corresponding to a wavelength of the electromagnetic signal. The physical length may refer to an electrical size or length expressed as a ratio of the wavelength (λ). The electromagnetic field radiated from the first conductive pattern 201 during feeding may have a resonance frequency corresponding to the physical length of the first conductive pattern 201 included in the signal path.

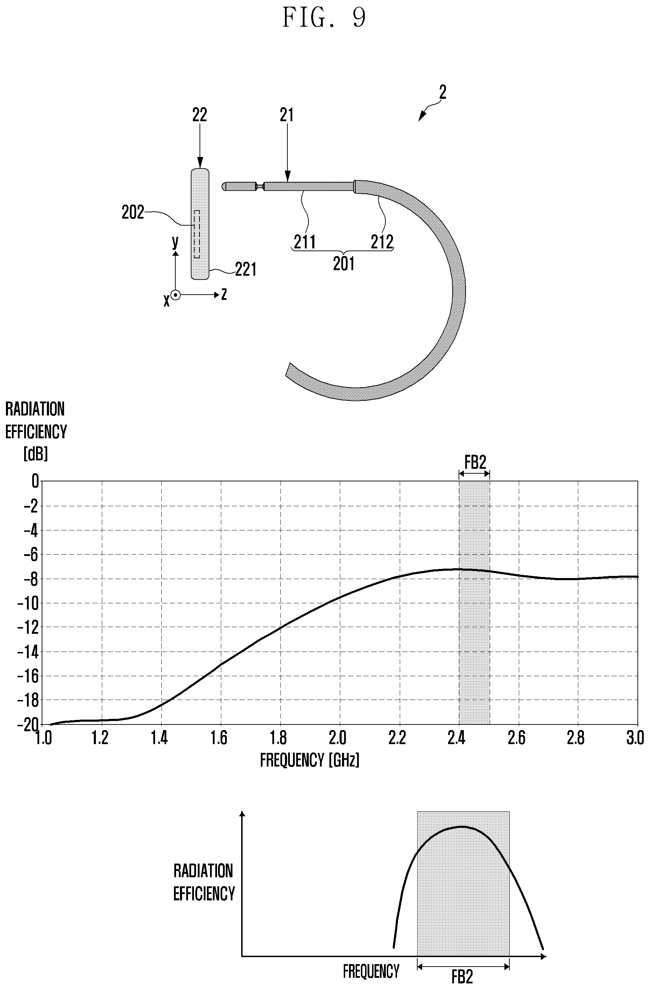

According to an embodiment, the earring 2 may include a second conductive pattern (e.g., the second conductive pattern 202 of FIG. 9) included in the earring back 22. The position of the second conductive pattern may vary. The wireless communication circuitry (e.g., the wireless communication circuitry 222 of FIG. 3) may be configured to transmit and/or receive a signal in at least one predetermined frequency band through the second conductive pattern.

According to an embodiment, the second conductive pattern may include at least a portion of a conductive portion or a conductive region positioned, disposed, or accommodated in the housing 221.

According to an embodiment, the second conductive pattern may include at least a portion of a conductive portion or a conductive region included in the housing 221.

According to an embodiment, the second conductive pattern may include a conductive pattern disposed on or included in the printed circuit board 41. The second conductive pattern may include, for example, a PCB embedded antenna (PEA).

According to an embodiment, the second conductive pattern may include a conductive pattern disposed on a separate non-conductor (also referred to as a "non-conductive member") accommodated in the housing 221.

According to an embodiment, the second conductive pattern may include the flexible conductor (e.g., the flexible conductor 42 of FIG. 4).

According to an embodiment, while the accessory 21 and the earring back 22 are separated, the wireless communication circuitry (e.g., the wireless communication circuitry 222 of FIG. 3) may be configured to transmit and/or receive a signal in at least one predetermined frequency band through the second conductive pattern (e.g., the second conductive pattern 202 of FIG. 9) included in the earring back 22.

According to an embodiment, while the accessory 21 and the earring back 22 are connected, the wireless communication circuitry (e.g., the wireless communication circuitry 222 of FIG. 3) may be configured to transmit and/or receive a signal in at least one predetermined frequency band through the first conductive pattern 201 (see FIG. 3) included in the accessory 21 and the second conductive pattern (e.g., the second conductive pattern 202 of FIG. 9) included in the earring back 22.

According to an embodiment, the plurality of electronic components 43 may include a matching circuit. The matching circuit may include, for example, an electrical element having a component such as inductance, capacitance, or conductance. The matching circuit may include, for example, various elements such as a lumped element or a passive element. The matching circuit may, for example, shift a resonance frequency of at least one antenna radiator of the earring 2 (e.g., the first conductive pattern 201 included in the accessory 21 and/or the second conductive pattern included in the earring back 22) to a predetermined frequency, or by a predetermined amount. The matching circuit may, for example, perform impedance matching for the at least one antenna radiator.

According to an embodiment, the matching circuit may be disposed on the conductive path 411 or may be electrically connected to the conductive path 411. The matching circuit may, for example, shift a resonance frequency of the first conductive pattern 201 of the accessory 110 (see FIG. 3) to a predetermined frequency, or by a predetermined amount. The matching circuit may, for example, substantially match an impedance of a transmission line (e.g., a combination of the conductive path 411 and the flexible conductor 42) and an impedance of the first conductive pattern 201 (see FIG. 3). The impedance matching may reduce an amount of reflection at a connection portion between the transmission line and the first conductive pattern 201 (see FIG. 3), thereby reducing deterioration of antenna radiation performance.

According to an embodiment, the earring 2 may include a ground structure (also referred to as a "ground") (not illustrated separately). The ground structure may include, for example, a ground region included in the printed circuit board 41 and various other conductors electrically connected to the ground region (e.g., a conductive portion included in the housing 221). The ground structure may reduce or prevent electromagnetic interference (EMI) with respect to electrical elements included in the earring 2. The ground structure may, for example, reduce or prevent an electromagnetic influence of noise from outside the earring 2 on the electrical elements included in the earring 2. The ground structure may, for example, reduce or prevent electromagnetic interference among the electrical elements included in the earring 2.

According to an embodiment, at least a portion of the ground structure of the earring 2 may operate as an antenna ground. The antenna ground may have an electromagnetic influence on at least one antenna radiator included in the earring 2 (e.g., the first conductive pattern 201 included in the accessory 21 and/or the second conductive pattern included in the earring back 22). The antenna ground may secure and/or improve antenna radiation performance (or radio wave transmission/reception performance or communication performance) and/or coverage with respect to the at least one antenna radiator. The antenna ground may reduce electromagnetic interference (EMI) or signal loss with respect to the at least one antenna radiator.

According to an embodiment, the antenna ground may exert an electromagnetic influence (e.g., electromagnetic force or radiation of radio waves) such that a beam pattern (or radiation pattern) radiated from the at least one antenna radiator (e.g., the first conductive pattern 201 included in the accessory 21 and/or the second conductive pattern included in the earring back 22) may be provided in a form capable of securing and/or improving radio wave transmission/reception performance in a predetermined direction.

According to an embodiment, the antenna ground may contribute to the at least one antenna radiator (e.g., the first conductive pattern 201 included in the accessory 21 and/or the second conductive pattern included in the earring back 22) providing a beam pattern having directivity with respect to a space in a predetermined direction.

According to an embodiment, while the earring 2 is worn on an ear 31 (see FIG. 2), the ground structure or the antenna ground may reduce an influence (e.g., specific absorption rate (SAR)) of the at least one antenna radiator (e.g., the first conductive pattern 201 included in the accessory 21 and/or the second conductive pattern included in the earring back 22) on the user.

According to an embodiment, the battery 44 (e.g., the battery 189 of FIG. 1) may be accommodated in the housing 221. The battery 44 may be disposed or coupled to the housing 221 through mechanical fastening such as screw fastening, or through bonding. The battery 44 may supply power to at least one electrical element (e.g., the wireless communication circuitry 222 of FIG. 3) disposed on the printed circuit board 41. The battery 44 may include, for example, a non-rechargeable primary battery, a rechargeable secondary battery, and/or a fuel cell.

According to an embodiment, the electrical connection member 45 may be accommodated in the housing 221. The electrical connection member 45 may electrically connect the printed circuit board 41 and the battery 44. A connector 46 electrically connected to the electrical connection member 45 may be disposed on the printed circuit board 41. The electrical connection member 45 may be variously provided as, for example, a flexible printed circuit board (FPCB) or a cable.

According to an embodiment, the plurality of electronic components 43 may include power management circuitry (e.g., the power management module 188 of FIG. 1). The power management circuitry may be electrically connected to the connector 46 through a conductive path included in the printed circuit board 41. The power management circuitry may be configured to manage power supplied to the earring 2 or consumed by the earring 2. The power management circuitry may be implemented as, for example, at least a portion of a PMIC.

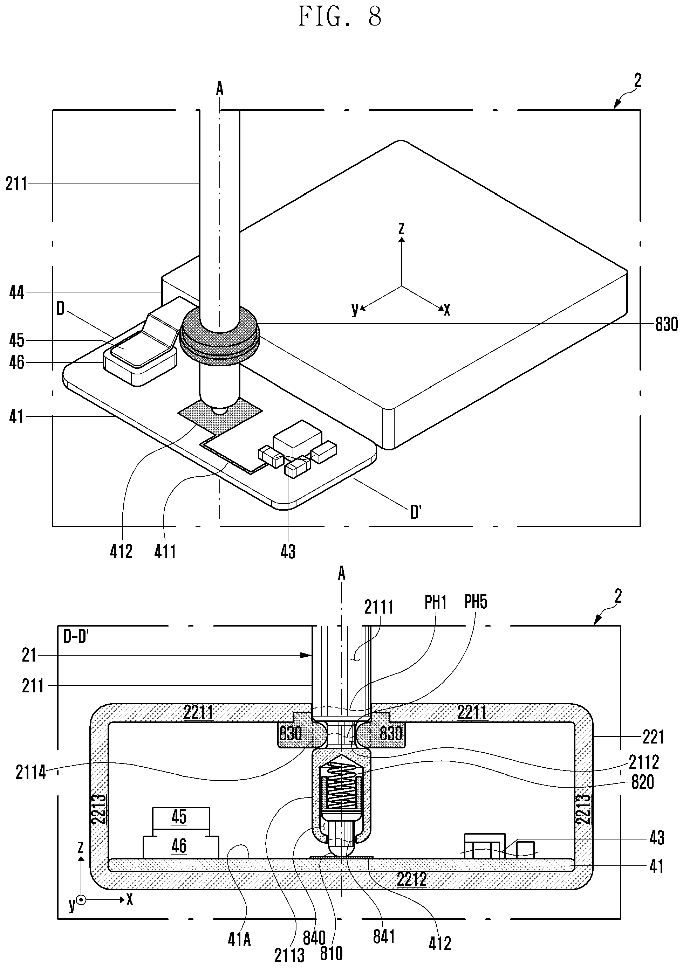

FIG. 8 illustrates a perspective view of a portion of an earring 2 according to an embodiment of the disclosure, and a cross-sectional view of a portion of the earring 2 taken along line D-D'.

Referring to FIG. 8, the earring 2 may include an accessory 21 and an earring back 22. The exemplary embodiment of FIG. 8 is obtained by partially changing or modifying the exemplary embodiment of FIG. 4. For any component that is at least partially the same as, similar to, or related to any one of the components of FIG. 4, the same term and/or the same reference numeral may be used, and the form thereof may be understood as being changed or modified.

According to an embodiment, the pin 211 of the accessory 21 may include a fourth portion 2111, a fifth portion 2112, a sixth portion 2113, a plunger 810, and/or a first elastic member (also referred to as a "first elastic body") 820.

According to an embodiment, the sixth portion 2113 and the plunger 810 may be slidably connected to each other. The sixth portion 2113 may include a guide 840. The guide 840 may include an inner space extending in a direction from the fourth portion 2111 toward the sixth portion 2113, and the guide 840 may include an opening 841 facing the printed circuit board 41. The sixth portion 2113 may also be referred to as a "barrel." The plunger 810 may be positioned in the guide 840 of the sixth portion 2113, and may be guided by the guide 840 to move relative to the sixth portion 2113 in the direction of the central axis A of the pin 211. Depending on a relative position of the plunger 810 with respect to the sixth portion 2113, a degree to which the plunger 810 protrudes out of the sixth portion 2113 through the opening 841 may vary. Interference between the plunger 810 and the sixth portion 2113 may be provided (or formed) so that the plunger 810 is not separated from the sixth portion 2113 through the opening 841 in a direction from the fourth portion 2111 toward the sixth portion 2113 (e.g., in the -z-axis direction).

According to an embodiment, the first elastic member 820 may be disposed between the sixth portion 2113 and the plunger 810. The plunger 810 may be elastically supported by the first elastic member 820 and may be movable relative to the sixth portion 2113 in the direction of the central axis A of the pin 211. The first elastic member 820 may be, for example, a compression spring, but is not limited thereto.

According to an embodiment, the pin 211 including a combination of the sixth portion 2113 (e.g., a barrel), the plunger 810, and the first elastic member 820 may be referred to as a "pogo pin."

According to an embodiment, when the pin 211 and the earring back 22 are fastened, the plunger 810 may be brought into physical contact with the printed circuit board 41 and may be electrically connected to the printed circuit board 41. When the pin 211 and the earring back 22 are fastened, the first conductive pattern 201 of the accessory 21 (see FIG. 3) may be electrically connected to wireless communication circuitry (e.g., the wireless communication circuitry 222 of FIG. 3) disposed on the printed circuit board 41 through physical contact between the plunger 810 and the printed circuit board 41.

According to an embodiment, the earring back 22 may include a housing 221, a printed circuit board 41, a plurality of electronic components 43, a battery 44, an electrical connection member 45, a connector 46, and/or a second elastic member (also referred to as a "second elastic body") 830.

According to an embodiment, the housing 221 may include a first plate 2211, a second plate 2212, and a side surface portion 2213. The first plate 2211 may include a first pin hole PH1. The pin 211 of the accessory 21 may be inserted into the inner space of the housing 221 through the first pin hole PH1.

According to an embodiment, the printed circuit board 41 may include a conductive terminal 412 disposed on the first board surface 41A. The conductive terminal 412 may be electrically connected to wireless communication circuitry (e.g., the wireless communication circuitry 222 of FIG. 3) included in a plurality of electronic components 43 disposed on the printed circuit board 41 through a conductive path 411 included in the printed circuit board 41. A combination of the conductive terminal 412 and the conductive path 411 may be defined or interpreted as a transmission line, a feeding line, or a feeding portion between the wireless communication circuitry and the first conductive pattern 201 (see FIG. 3). When the pin 211 and the earring back 22 are fastened, the plunger 810 may be brought into physical contact with the conductive terminal 412 of the printed circuit board 41.

According to an embodiment, the second elastic member 830 may be disposed or coupled to the first plate 2211 of the housing 221. The second elastic member 830 may be coupled to the first plate 2211 through mechanical fastening such as screw fastening, or through bonding. The second elastic member 830 may have a looped shape and may include a fifth pin hole PH5 corresponding to the first pin hole PH1 of the housing 221. The pin 211 of the accessory 21 may be inserted into the inner space of the housing 221 through the first pin hole PH1 and the fifth pin hole PH5. A combination of the first pin hole PH1 and the fifth pin hole PH5 may be referred to as a "pin hole" of the earring back 22. The pin 211 of the accessory 21 may be supported by the pin hole of the earring back 22 and may be stably positioned in the earring back 22. When the second elastic member 830 is inserted into the groove 2114 of the pin 211, the pin 211 and the second elastic member 830 may be fastened to each other due to interference between the second elastic member 830 and the groove 2114. When a relative position between the pin 211 and the earring back 22 is changed so that the accessory 21 and the earring back 22 are coupled to each other or separated from each other, the second elastic member 830 may be elastically deformed between a first state in which the second and third portions 422 and 423 are positioned with the sixth portion 2113 interposed therebetween and a second state in which the second and third portions 422 and 423 are positioned in the groove 2114 with the fifth portion 2112 interposed therebetween.

According to an embodiment, the second elastic member 830 may be formed of various elastic materials or flexible materials such as rubber or silicone.

According to an embodiment, when the pin 211 of the accessory 21 and the second elastic member 830 are fastened, the plunger 810 of the pin 211 may be elastically supported by the first elastic member 820 and may be brought into physical contact with the conductive terminal 412 of the printed circuit board 41. A fastening force between the pin 211 of the accessory 21 and the second elastic member 830 may be greater than a compression force of the first elastic member 820.

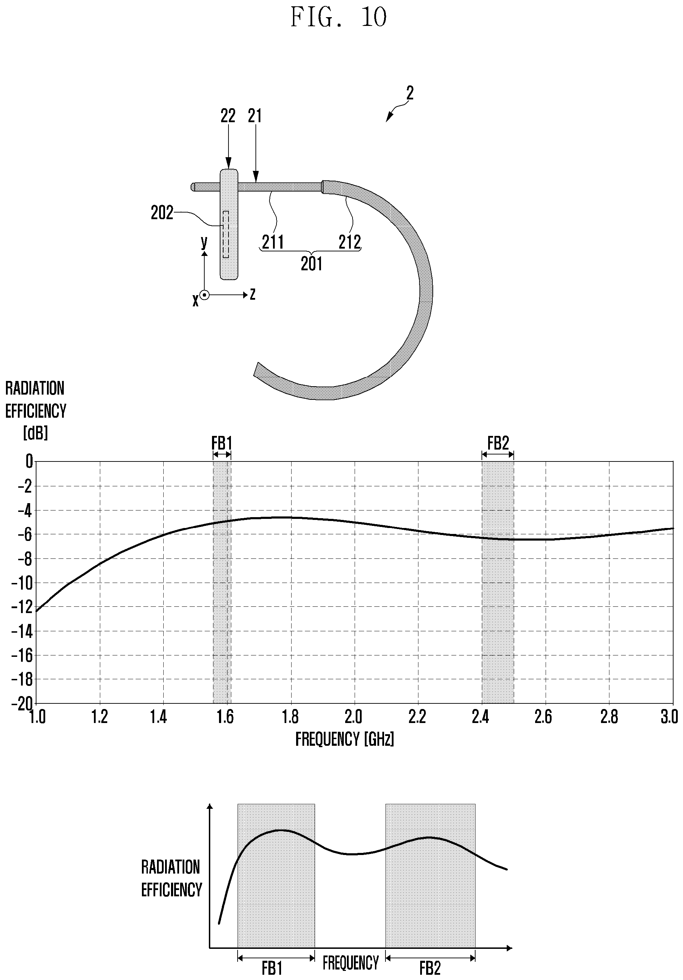

FIG. 9 illustrates an earring 2 according to an embodiment of the disclosure in a state in which an accessory 21 and an earring back 22 are separated, and graphs showing antenna radiation efficiency of the earring 2. FIG. 10 illustrates the earring 2 according to an embodiment of the disclosure in a state in which the accessory 21 and the earring back 22 are connected, and graphs showing antenna radiation efficiency of the earring 2.

Referring to FIGS. 9 and 10, the earring 2 may include a second conductive pattern 202 included in the earring back 22.

According to an embodiment, the second conductive pattern 202 may include at least a portion of a conductive portion or a conductive region positioned, disposed, or accommodated in the housing 221.

According to an embodiment, the second conductive pattern 202 may be at least a portion of a conductive portion or a conductive region included in the housing 221.

According to an embodiment, the second conductive pattern 202 may include a conductive pattern disposed on or included in a printed circuit board 41 (see FIG. 4). The second conductive pattern 202 may include, for example, a PEA.

According to an embodiment, the second conductive pattern 202 may include a conductive pattern disposed on a separate non-conductor (also referred to as a "non-conductive member") accommodated in the housing 221. The second conductive pattern 202 may include, for example, a conductive pattern disposed on a non-conductor through laser direct structuring (LDS). LDS may be a method of forming a conductive pattern by patterning a non-conductor using a laser and plating a conductive material such as copper or nickel thereon.

According to an embodiment, the second conductive pattern 202 may include the flexible conductor (e.g., the flexible conductor 42 of FIG. 4). The flexible conductor may be electrically connected to at least one other conductive element of the second conductive pattern 202. The at least one other conductive element may include at least a portion of a conductive portion or a conductive region positioned, disposed, or accommodated in the housing 221. The at least one other conductive element may include at least a portion of a conductive portion or a conductive region included in the housing 221. The at least one other conductive element may include a PCB embedded antenna (PEA). The at least one other conductive element may include a conductive pattern formed through LDS. The at least one other conductive element may be variously provided.

According to an embodiment, while the accessory 21 and the earring back 22 are separated, wireless communication circuitry (e.g., the wireless communication circuitry 222 of FIG. 3) may be configured to transmit and/or receive a signal in a second frequency band FB2 through the second conductive pattern (also referred to as a "second antenna radiator") 202 included in the earring back 22. When the wireless communication circuitry provides (or feeds) an electromagnetic signal (or a wireless signal, an RF signal, or a radiation current) to the second conductive pattern 202, an electromagnetic field (also referred to as a "radiation field") radiated from the second conductive pattern 202 may resonate at a frequency included in the second frequency band FB2.

According to an embodiment, while the accessory 21 and the earring back 22 are separated, the wireless communication circuitry (e.g., the wireless communication circuitry 222 of FIG. 3) may transmit and/or receive a signal in a frequency band of a first short-range communication network through the second conductive pattern 202. The first short-range communication network may include, for example, Bluetooth.

According to an embodiment, while the accessory 21 and the earring back 22 are connected, the wireless communication circuitry (e.g., the wireless communication circuitry 222 of FIG. 3) may be configured to transmit and/or receive a signal in at least one predetermined frequency band through the first conductive pattern (also referred to as a "first antenna radiator") 201 included in the accessory 21 and the second conductive pattern (also referred to as a "second antenna radiator") 202 included in the earring back 22. When the wireless communication circuitry provides (or feeds) an electromagnetic signal (or a wireless signal, an RF signal, or a radiation current) to the first conductive pattern 201 and the second conductive pattern 202, an electromagnetic field (also referred to as a "radiation field") radiated from the first and second conductive patterns 201 and 202 may resonate at a first frequency included in a first frequency band FB1 and a second frequency included in a second frequency band FB2. In an embodiment, the first conductive pattern 201 may substantially resonate at the first frequency, and the second conductive pattern 202 may substantially resonate at the second frequency.

According to an embodiment, while the accessory 21 and the earring back 22 are connected, the wireless communication circuitry (e.g., the wireless communication circuitry 222 of FIG. 3) may transmit and/or receive, through the first and second conductive patterns 201 and 202, a signal in a first frequency band of the first short-range communication network and a signal in a second frequency band of a second short-range communication network. The first short-range communication network may include, for example, Bluetooth. The second short-range communication network may include, for example, WiFi.

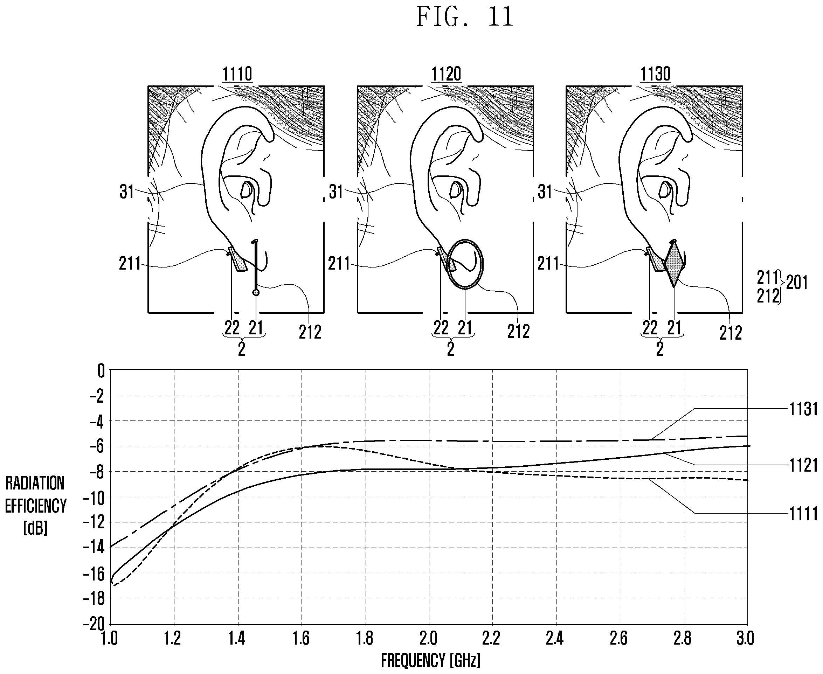

FIG. 11 illustrates various forms of an earring 2 worn on an ear 31 of a user according to various embodiments of the disclosure, and graphs showing antenna radiation efficiency of the earring 2 according to the forms thereof.

Referring to FIG. 11, the earring 2 may include an accessory 21 and an earring back 22. The accessory 21 may include a pin 211 passing through a piercing of the ear 31 and fastened to the earring back 22, and a conductive member 212 extending from the pin 211. A first conductive pattern 201, which is a combination of the pin 211 and the conductive member 212 of the accessory 21, may operate as an antenna radiator by being provided with (or fed with) an electromagnetic signal (or a wireless signal, an RF signal, or a radiation current) from wireless communication circuitry (e.g., the wireless communication circuitry 222 of FIG. 3) included in the earring back 22.

Graph 1111 shows antenna radiation efficiency of an earring 2 according to a first example 1110. Graph 1121 shows antenna radiation efficiency of an earring 2 according to a second example 1120. Graph 1131 shows antenna radiation efficiency of an earring 2 according to a third example 1130. Referring to graphs 1111, 1121, and 1131, a frequency characteristic (e.g., a resonance frequency) of the earring 2 may vary depending on the shape of the conductive member 212 of the earring 2.

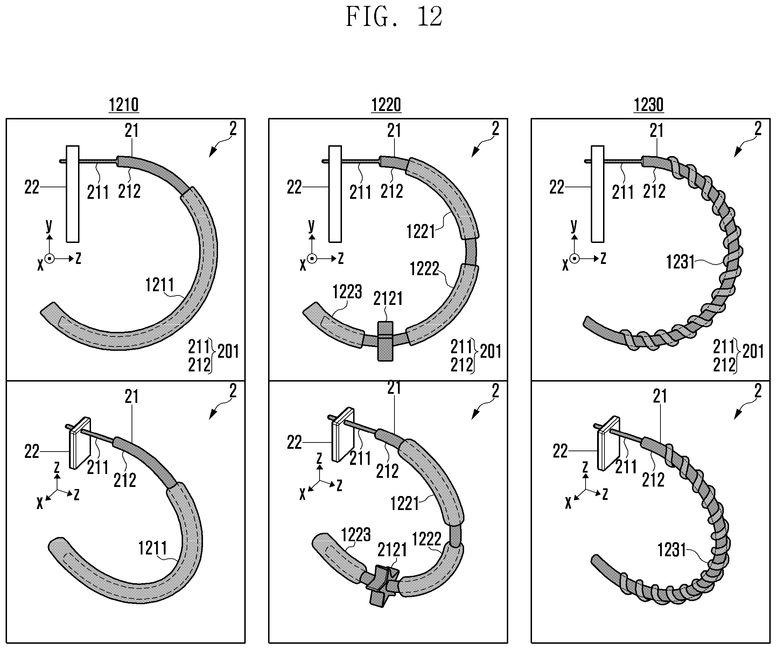

FIG. 12 illustrates earrings 2 according to various embodiments of the disclosure.

Referring to FIG. 12, an earring 2 according to a fourth example 1210, an earring 2 according to a fifth example 1220, and an earring 2 according to a sixth example 1230 may each include an accessory 21 and an earring back 22.

According to an embodiment, the accessory 21 of the earring 2 according to the fourth example 1210 may include a pin 211, a conductive member 212, and a non-conductive member 1211. The non-conductive member 1211 may be disposed on the conductive member 212 as an additional accessory member. At least a portion of the conductive member 212 may be positioned, for example, inside the non-conductive member 1211.

According to an embodiment, in the fourth example 1210, a first conductive pattern 201, which is a combination of the pin 211 and the conductive member 212 of the accessory 21, may operate as an antenna radiator by being provided with (or fed with) an electromagnetic signal (or a wireless signal, an RF signal, or a radiation current) from wireless communication circuitry (e.g., the wireless communication circuitry 222 of FIG. 3) included in the earring back 22. The non-conductive member 1211 may have an electromagnetic influence on the first conductive pattern 201. The non-conductive member 1211 may also be referred to as a "non-conductive pattern." A combination of the first conductive pattern 201 and the non-conductive member 1211 may have a different frequency characteristic (e.g., a resonance frequency) compared to a comparative example including only the first conductive pattern 201. In order to allow the combination of the first conductive pattern 201 and the non-conductive member 1211 to resonate in at least one predetermined frequency band, the shape of the conductive member 212, the relative shape or position of the non-conductive member 1211 with respect to the conductive member 212, and/or the dielectric constant of the non-conductive member 1211 may vary.

According to an embodiment, in the fourth example 1210, the first conductive pattern 201 may have an electrical length expressed as a ratio of a wavelength corresponding to an operating frequency (also referred to as a "used frequency") of the earring 2. The non-conductive member 1211 may have a dielectric constant corresponding to the electrical length of the first conductive pattern 201.

According to an embodiment, the accessory 21 of the earring 2 according to the fifth example 1220 may include a pin 211, a conductive member 212, a first non-conductive member 1221, a second non-conductive member 1222, and a third non-conductive member 1223. For example, the first non-conductive member 1221, the second non-conductive member 1222, and the third non-conductive member 1223 may be disposed on the conductive member 212 as additional accessory members and may be spaced apart from each other. In an embodiment, the conductive member 212 of the fifth example 1220 may be variously provided (or formed), for example, in a form further including a portion 2121 formed between the second non-conductive member 1222 and the third non-conductive member 1223, compared to the conductive member 212 of the fourth example 1210 or the sixth example 1230.

According to an embodiment, in the fifth example 1220, a first conductive pattern 201, which is a combination of the pin 211 and the conductive member 212 of the accessory 21, may operate as an antenna radiator by being provided with (or fed with) an electromagnetic signal (or a wireless signal, an RF signal, or a radiation current) from wireless communication circuitry (e.g., the wireless communication circuitry 222 of FIG. 3) included in the earring back 22. The first, second, and third non-conductive members 1221, 1222, and 1223 in the fifth example 1220 may have an electromagnetic influence on the first conductive pattern 201. A combination of the first, second, and third non-conductive members 1221, 1222, and 1223 may also be referred to as a "non-conductive pattern." A combination of the conductive pattern 201 and the first, second, and third non-conductive members 1221, 1222, and 1223 may have a different frequency characteristic (e.g., a resonance frequency) compared to a comparative example including only the first conductive pattern 201. In order to allow the combination of the conductive pattern 201 and the first, second, and third non-conductive members 1221, 1222, and 1223 to resonate in at least one predetermined frequency band, the shape of the conductive member 212, the relative shape or position of the first, second, and/or third non-conductive member 1221, 1222, and/or 1223 with respect to the conductive member 212, and/or the dielectric constant of the first, second, and/or third non-conductive member 1221, 1222, and/or 1223 may vary.

According to an embodiment, in the fifth example 1220, the first conductive pattern 201 may have an electrical length expressed as a ratio of a wavelength corresponding to an operating frequency of the earring 2. The first, second, and/or third non-conductive member 1221, 1222, and/or 1223 may have a dielectric constant corresponding to the electrical length of the first conductive pattern 201.

According to an embodiment, the accessory 21 of the earring 2 according to the sixth example 1230 may include a pin 211, a conductive member 212, and a non-conductive member 1231. The non-conductive member 1231 may be disposed on the conductive member 212 as an additional accessory member. The non-conductive member 1231 may be provided (or formed), for example, in a band shape disposed to surround the conductive member 212.

According to an embodiment, in the sixth example 1230, a first conductive pattern 201, which is a combination of the pin 211 and the conductive member 212 of the accessory 21, may operate as an antenna radiator by being provided with (or fed with) an electromagnetic signal (or a wireless signal, an RF signal, or a radiation current) from wireless communication circuitry (e.g., the wireless communication circuitry 222 of FIG. 3) included in the earring back 22. In the sixth example 1230, the non-conductive member 1231 may have an electromagnetic influence on the first conductive pattern 201. The non-conductive member 1213 may also be referred to as a "non-conductive pattern." A combination of the conductive pattern 201 and the non-conductive member 1231 may have a different frequency characteristic (e.g., a resonance frequency) compared to a comparative example including only the first conductive pattern 201. In order to allow the combination of the conductive pattern 201 and the non-conductive member 1231 to resonate in at least one predetermined frequency band, the shape of the conductive member 212, the relative shape or position of the non-conductive member 1231 with respect to the conductive member 212, and/or the dielectric constant of the non-conductive member 1231 may vary.

According to an embodiment, in the sixth example 1230, the first conductive pattern 201 may have an electrical length expressed as a ratio of a wavelength corresponding to an operating frequency of the earring 2. The non-conductive member 1231 may have a dielectric constant corresponding to the electrical length of the first conductive pattern 201.

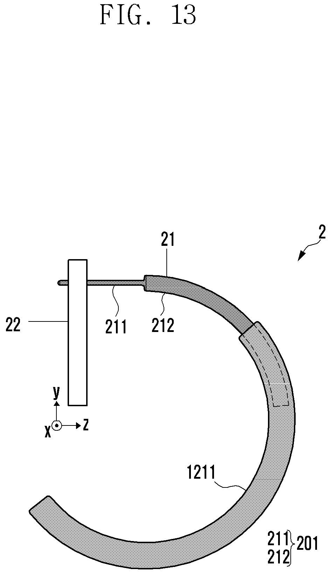

FIG. 13 illustrates an earring 2 according to various embodiments of the disclosure.

Referring to FIG. 13, the earring 2 according to a seventh example may include a pin 211, a conductive member 212, and a non-conductive member 1211. The non-conductive member 1211 may be disposed on the conductive member 212 as an additional accessory member. At least a portion of the conductive member 212 may be positioned, for example, inside the non-conductive member 1211.

According to an embodiment, a first conductive pattern 201, which is a combination of the pin 211 and the conductive member 212 of the accessory 21, may operate as an antenna radiator by being provided with (or fed with) an electromagnetic signal (or a wireless signal, an RF signal, or a radiation current) from wireless communication circuitry (e.g., the wireless communication circuitry 222 of FIG. 3) included in the earring back 22. The non-conductive member 1211 (e.g., a non-conductive pattern) may have an electromagnetic influence on the first conductive pattern 201. A combination of the first conductive pattern 201 and the non-conductive member 1211 may have a different frequency characteristic (e.g., a resonance frequency) compared to a comparative example including only the first conductive pattern 201. In order to allow the combination of the first conductive pattern 201 and the non-conductive member 1211 to resonate in at least one predetermined frequency band, the shape of the conductive member 212, a relative shape or position of the non-conductive member 1211 with respect to the conductive member 212, and/or a dielectric constant of the non-conductive member 1211 may vary.

According to an embodiment, the first conductive pattern 201 may have an electrical length expressed as a ratio of a wavelength corresponding to an operating frequency (also referred to as a "used frequency") of the earring 2. The conductive member 212 of the first conductive pattern 201 may be provided (or formed) to have a shorter physical length (or radiator length) than the conductive member 212 according to the fourth example 1210 of FIG. 12 in order to adjust resonance characteristics (e.g., a resonance frequency). The non-conductive member 1211 may have a dielectric constant corresponding to the electrical length of the first conductive pattern 201.

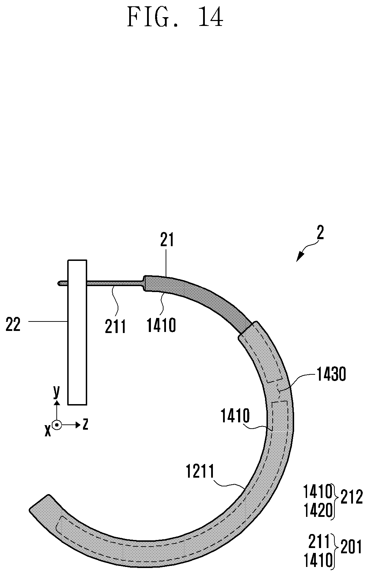

FIG. 14 illustrates an earring 2 according to various embodiments of the disclosure.

Referring to FIG. 14, the earring 2 according to an eighth example may include a pin 211, a conductive member 212, and a non-conductive member 1211. The non-conductive member 1211 may be disposed on the conductive member 212 as an additional accessory member. At least a portion of the conductive member 212 may be positioned, for example, inside the non-conductive member 1211.

According to an embodiment, the conductive member 212 may include, compared to the conductive member 212 according to the fourth example 1210 of FIG. 12, a first conductive portion 1410 and a second conductive portion 1420. The first conductive portion 1410 and the second conductive portion 1420 may be physically separated from each other with a segmentation portion (also referred to as a gap) 1430 interposed between the first conductive portion 1410 and the second conductive portion 1420. The first conductive portion 1410 may extend from the pin 211 or may be connected to the pin 211. The segmentation portion 1430 may be covered by the non-conductive member 1211 and may not be exposed to the outside. A portion of the non-conductive member 1211 may be positioned in the segmentation portion 1430.

According to an embodiment, a first conductive pattern 201, which is a combination of the pin 211 and the conductive member 212 of the accessory 21, may operate as an antenna radiator by being provided with (or fed with) an electromagnetic signal (or a wireless signal, an RF signal, or a radiation current) from wireless communication circuitry (e.g., the wireless communication circuitry 222 of FIG. 3) included in the earring back 22. The non-conductive member 1211 (e.g., a non-conductive pattern) may have an electromagnetic influence on the first conductive pattern 201. A combination of the first conductive pattern 201 and the non-conductive member 1211 may have a different frequency characteristic (e.g., a resonance frequency) compared to a comparative example including only the first conductive pattern 201.

According to an embodiment, the first conductive pattern 201 may have an electrical length expressed as a ratio of a wavelength corresponding to an operating frequency (also referred to as a "used frequency") of the earring 2. The segmentation portion 1430 may allow a portion of the conductive member 212 (e.g., the first conductive portion 1410) to operate as an antenna radiator, and the first conductive pattern 201 may have a shorter physical length (or radiator length) than the first conductive pattern 201 according to the fourth example 1210 of FIG. 12. The non-conductive member 1211 may have a dielectric constant corresponding to the electrical length of the first conductive pattern 201.

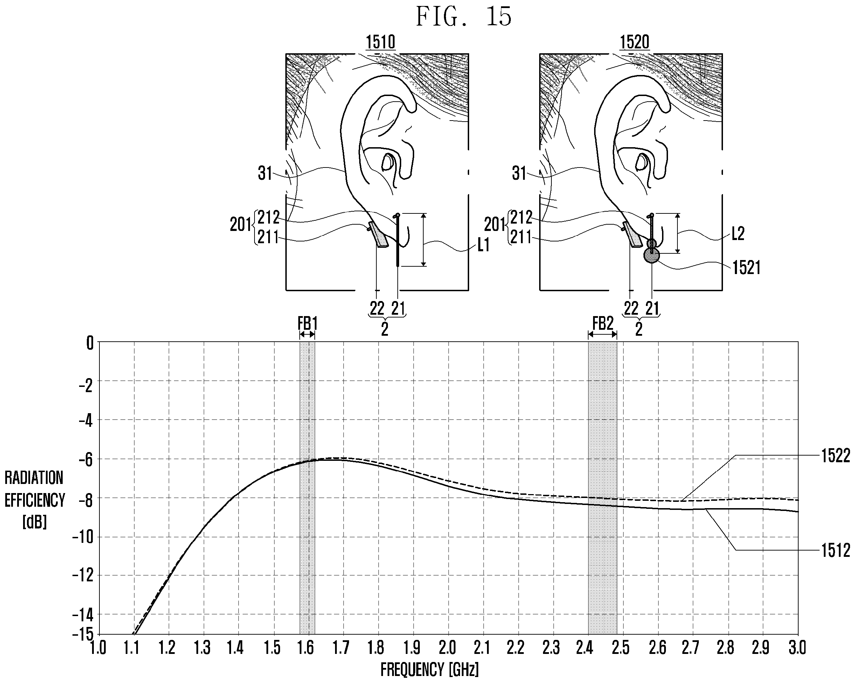

FIG. 15 illustrates various forms of an earring 2 worn on an ear 31 of a user according to various embodiments of the disclosure, and graphs showing antenna radiation efficiency of the earring 2 according to the forms thereof.

Referring to FIG. 15, an earring 2 according to a ninth example 1510 and an earring 2 according to a tenth example 1520 may each include an accessory 21 and an earring back 22.

According to an embodiment, the accessory 21 of the earring 2 according to the ninth example 1510 may include a pin 211 and a conductive member 212. A first conductive pattern 201, which is a combination of the pin 211 and the conductive member 212 of the accessory 21, may operate as an antenna radiator by being provided with (or fed with) an electromagnetic signal (or a wireless signal, an RF signal, or a radiation current) from wireless communication circuitry (e.g., the wireless communication circuitry 222 of FIG. 3) included in the earring back 22. Graph 1512 shows antenna radiation efficiency of the earring 2 according to the ninth example 1510.

According to an embodiment, the accessory 21 of the earring 2 according to the tenth example 1520 may include a pin 211, a conductive member 212, and a non-conductive member 1521. A first conductive pattern 201, which is a combination of the pin 211 and the conductive member 212 of the accessory 21, may operate as an antenna radiator by being provided with (or fed with) an electromagnetic signal (or a wireless signal, an RF signal, or a radiation current) from wireless communication circuitry (e.g., the wireless communication circuitry 222 of FIG. 3) included in the earring back 22. The non-conductive member 1521 may be disposed on the conductive member 212 and have an electromagnetic influence on the first conductive pattern 201. Graph 1522 shows antenna radiation efficiency of the earring 2 according to the tenth example 1520.

According to an embodiment, the conductive member 212 according to the ninth example 1510 may be provided (or formed) to have a first physical length L1. The first physical length L1 may be, for example, about 40 mm.

According to an embodiment, the conductive member 212 according to the tenth example 1520 may be provided (or formed) to have a second physical length L2 shorter than the first physical length L1. The second physical length L2 may be, for example, about 30 mm. Referring to graph 1512 and graph 1522, the conductive member 212 of the tenth example 1520 has a shorter physical length than the conductive member 212 of the ninth example 1510, but the earring 2 of the tenth example may substantially have a frequency characteristic (e.g., a resonance frequency) corresponding to that of the earring 2 of the ninth example securing antenna radiation efficiency in at least one predetermined frequency band (e.g., a first frequency band FB1 and/or a second frequency band FB2) due to an electromagnetic influence of the non-conductive member 1521 (e.g., an influence of a dielectric constant of about 3.5). The earring 2 according to the tenth example may improve aesthetics due to addition of the non-conductive member 1521 while reducing a size (e.g., a physical length) of the conductive member 212 compared to the earring 2 according to the ninth example.

According to various embodiments, in order to allow the combination of the first conductive pattern 201 and the non-conductive member 1521 to resonate in at least one predetermined frequency band, the shape of the conductive member 212, the relative shape or position of the non-conductive member 1521 with respect to the conductive member 212, and/or the dielectric constant of the non-conductive member 1521 may vary.

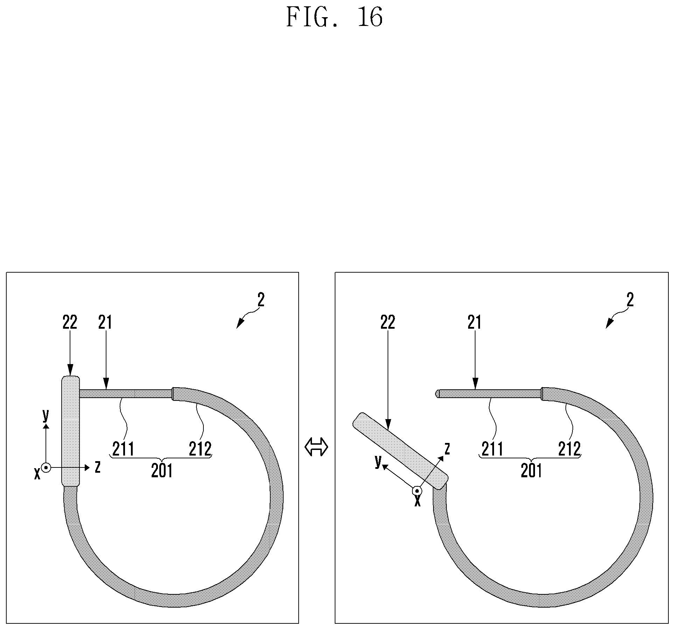

FIG. 16 illustrates an earring 2 according to various embodiments of the disclosure.

Referring to FIG. 16, the earring 2 may each include an accessory 21 and an earring back 22.

According to an embodiment, the accessory 21 may include a first conductive pattern 201 including a pin 211 and a conductive member 212. Wireless communication circuitry (e.g., the wireless communication circuitry 222 of FIG. 3) included in the earring back 22 may be configured to transmit and/or receive a signal in at least one predetermined frequency band through the first conductive pattern 201.

According to an embodiment, the earring back 22 may be a structural element for securely fixing the accessory 21 to an ear (e.g., an earlobe). The earring back 22 may be rotatably connected to the accessory 21. The earring back 22 and the accessory 21 may be, for example, hinge-connected. When the earring 2 is worn on an ear of a user, after the pin 211 of the accessory 21 passes through a piercing of the ear, the earring back 22 may be rotated with respect to the accessory 21 so that the earring back 22 and the pin 211 of the accessory 21 are fastened to each other. When the earring 2 is separated from the ear of the user, the earring back 22 may be rotated with respect to the accessory 21 so that the earring back 22 and the pin 211 of the accessory 21 are separated from each other.

According to an embodiment, wireless communication circuitry (e.g., the wireless communication circuitry 222 of FIG. 3) included in the earring back 22 may maintain electrical connection with the first conductive pattern 201 of the accessory 21 through a portion which connects the earring back 22 and the accessory 21 to be rotatable relative to each other (e.g., a rotational connection portion).

According to various embodiments, the rotational connection portion between the earring back 22 and the accessory 21 may be configured such that the first conductive pattern 201 is electrically connected to the wireless communication circuitry when the earring back 22 and the accessory 21 are relatively positioned so as to fasten the pin 211 of the accessory 21 to the earring back 22. The rotational connection portion between the earring back 22 and the accessory 21 may be configured such that the first conductive pattern 201 is electrically separated from the wireless communication circuitry when the earring back 22 and the accessory 21 are relatively positioned so as to separate the pin 211 of the accessory 21 from the earring back 22.

According to an embodiment, the wireless communication circuitry (e.g., the wireless communication circuitry 222 of FIG. 3) included in the earring back 22 may be electrically connected to the first conductive pattern 201 through an electrical conduction structure between the earring back 22 and the accessory 21 (e.g., physical contact between the plunger 810 of FIG. 8 and the conductive terminal 412 of the printed circuit board 41) when the pin 211 of the accessory 21 is fastened to the earring back 22. The wireless communication circuitry may be electrically separated from the first conductive pattern 201 through electrical separation between the earring back 22 and the accessory 21 (e.g., physical separation between the plunger 810 of FIG. 8 and the conductive terminal 412 of the printed circuit board 41) when the pin 211 of the accessory 21 is separated from the earring back 22.

According to an embodiment, the wireless communication circuitry (e.g., the wireless communication circuitry 222 of FIG. 3) included in the earring back 22 may be configured to transmit and/or receive a signal in at least one predetermined frequency band through at least one of the first conductive pattern 201 of the accessory 21 and the second conductive pattern 202 of the earring back 22 (see FIG. 9).

According to various embodiments, the pin 211 of the accessory 21 may be implemented to pass through the earring back 22.

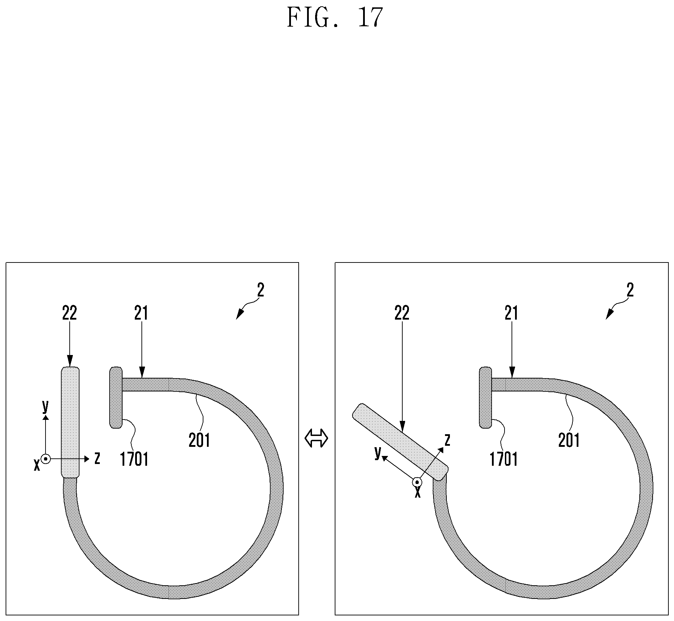

FIG. 17 illustrates an earring 2 according to various embodiments of the disclosure.

Referring to FIG. 17, the earring 2 may each include an accessory 21 and an earring back 22.

According to an embodiment, the accessory 21 may include a first conductive pattern 201. Wireless communication circuitry (e.g., the wireless communication circuitry 222 of FIG. 3) included in the earring back 22 may be configured to transmit and/or receive a signal in at least one predetermined frequency band through the first conductive pattern 201.

According to an embodiment, the earring back 22 may be a structural element for securely fixing the accessory 21 to an ear (e.g., an earlobe). The earring back 22 may be rotatably connected to one end (e.g., a first end) of the accessory 21. The earring back 22 and the accessory 21 may be, for example, hinge-connected. The first conductive pattern 201 may include a support 1701 positioned at the other end (e.g., a second end) of the accessory 21. When the earring 2 is worn on an ear of a user, the earring back 22 may be rotated with respect to the accessory 21 so that the earring back 22 comes closer to the support 1701 and the earring back 22 and the support 1701 of the accessory 21 face each other with the ear interposed therebetween. The earring 2 may be worn on the ear as the earring back 22 and the support 1701 support the ear. When the earring 2 is separated from the ear of the user, the earring back 22 may be rotated with respect to the accessory 21 so that the earring back 22 moves away from the support 1701.

According to an embodiment, electrical connection between the wireless communication circuitry (e.g., the wireless communication circuitry 222 of FIG. 3) included in the earring back 22 and the first conductive pattern 201 of the accessory 21 may be maintained through a portion that connects the earring back 22 and the accessory 21 to be rotatable relative to each other (e.g., a rotational connection portion).

According to various embodiments, the rotational connection portion between the earring back 22 and the accessory 21 may be configured such that the first conductive pattern 201 is electrically connected to the wireless communication circuitry when the earring back 22 and the accessory 21 are relatively positioned so that the pin 211 of the accessory 21 and the earring back 22 are fastened to each other. The rotational connection portion between the earring back 22 and the accessory 21 may be configured such that the first conductive pattern 201 is electrically separated from the wireless communication circuitry when the earring back 22 and the accessory 21 are relatively positioned so that the pin 211 of the accessory 21 and the earring back 22 are separated from each other.

According to an embodiment, the wireless communication circuitry (e.g., the wireless communication circuitry 222 of FIG. 3) included in the earring back 22 may be configured to transmit and/or receive a signal in at least one predetermined frequency band through at least one of the first conductive pattern 201 of the accessory 21 and the second conductive pattern 202 of the earring back 22 (see FIG. 9).

According to various embodiments, the support 1701 may be formed of a non-conductive material and may be excluded from the first conductive pattern 201.

According to various embodiments, a non-pierced earring may be provided or formed in various other shapes without being limited to the example of FIG. 15.

According to an exemplary embodiment of the disclosure, an earring 2 may include an accessory 21 and an earring back 22. The accessory 21 may include a first conductive pattern 201. The earring back 22 may include wireless communication circuitry 222. The wireless communication circuitry 222 may be configured to transmit and/or receive a signal in at least one predetermined frequency band through the first conductive pattern 201.

According to an exemplary embodiment of the disclosure, the first conductive pattern 201 may include a pin 211 configured to pass through a piercing of an ear 31 of a user, and a conductive member 212 extending from the pin 211. The earring back 22 may further include a housing 221 and a flexible conductor 42 accommodated in the housing 221 and elastically fastened to the pin 211. The wireless communication circuitry 222 may be electrically connected to the first conductive pattern 201 through the flexible conductor 42.

According to an exemplary embodiment of the disclosure, the earring back 22 may further include a printed circuit board 41 accommodated in the housing 221. The flexible conductor 42 and the wireless communication circuitry 222 may be disposed on the printed circuit board 41.

According to an exemplary embodiment of the disclosure, the earring back 22 may include a pin hole PH through which the pin 211 passes. The earring back 22 may be reversibly fastened to the pin 211.

According to exemplary embodiments of the disclosure, the first conductive pattern 201 may include a pin 211 configured to pass through a piercing of an ear 31 of a user, and a conductive member 212 extending from the pin 211. The earring back 22 may include a housing 221, an elastic member (e.g., the second elastic member 830) disposed in the housing 221 and elastically fastened to the pin 211, and a printed circuit board 41 accommodated in the housing 221. The pin 211 may be a pogo pin configured to be brought into physical contact with a conductive terminal 412 disposed on the printed circuit board 41.

According to an exemplary embodiment of the disclosure, the earring back 22 may further include a second conductive pattern 202. While the accessory 21 and the earring back 22 are connected, the wireless communication circuitry 222 may be configured to transmit and/or receive a signal in the at least one predetermined frequency band through the first conductive pattern 201 and the second conductive pattern 202. While the accessory 21 and the earring back 22 are separated, the wireless communication circuitry 222 may be configured to transmit and/or receive a signal in the at least one predetermined frequency band through the second conductive pattern 202.

According to an exemplary embodiment of the disclosure, the first conductive pattern 201 may include a pin 211 configured to pass through a piercing of an ear 31 of a user, and a conductive member 212 extending from the pin 211. The earring back 22 may further include a housing 221 and a flexible conductor 42 accommodated in the housing 221 and elastically fastened to the pin 211. The second conductive pattern 202 may include a flexible conductor 42.

According to an exemplary embodiment of the disclosure, the second conductive pattern 202 may further include at least one conductive portion positioned in the earring back 22 and electrically connected to the flexible conductor 42.

According to an exemplary embodiment of the disclosure, the at least one conductive portion may include a PCB embedded antenna (PEA).

According to an exemplary embodiment of the disclosure, the at least one conductive portion may be formed through laser direct structuring (LDS).

According to an exemplary embodiment of the disclosure, the earring 2 may further include a matching circuit accommodated in the earring back 22 and electrically connected to the wireless communication circuitry 222.

According to an exemplary embodiment of the disclosure, the at least one predetermined frequency band may include a frequency band for Bluetooth communication and/or a frequency band for Wi-Fi communication.

According to an exemplary embodiment of the disclosure, the accessory 21 may further include a non-conductive member 1211 disposed on the first conductive pattern 201. The first conductive pattern 201 may have an electrical length corresponding to a wavelength of the signal. The non-conductive member 1211 may have a dielectric constant corresponding to the electrical length.

According to an exemplary embodiment of the disclosure, the earring 2 may further include a battery 44 accommodated in the earring back 22 and electrically connected to the wireless communication circuitry 222.

According to an exemplary embodiment of the disclosure, the earring back 22 may be rotatably connected to a first end of the accessory 21. The earring 2 may include a support 1701 positioned at a second end of the accessory 21. In a state in which the earring 2 is worn on an ear 31 of a user, the earring back 22 may be positioned to face the support 1701 with the ear 31 interposed therebetween.

The embodiments disclosed in the disclosure and the drawings are merely presented as specific examples to more easily explain the technical idea and to facilitate understanding of the disclosure, and are not intended to limit the scope of the disclosure. Accordingly, the scope of various embodiments of the disclosure should be construed as including, in addition to the embodiments disclosed herein, modified forms or altered forms within the scope of the various embodiments of the disclosure. In addition, it will be understood that any embodiment(s) described herein may be used together with any other embodiment(s) described herein.

## Claims

1. An earring (2) comprising:
an accessory (21) including a first conductive pattern (201); and
an earring back (22) including wireless communication circuitry (222) configured to transmit and/or receive a signal in at least one predetermined frequency band through the first conductive pattern (201).

2. The earring of claim 1, wherein the first conductive pattern (201) includes a pin (211) configured to pass through a piercing of an ear (31) of a user, and a conductive member (212) extending from the pin (211),
wherein the earring back (22) further includes a housing (221) and a flexible conductor (42) accommodated in the housing (221) and elastically fastened to the pin (211), and
wherein the wireless communication circuitry (222) is electrically connected to the first conductive pattern (201) through the flexible conductor (42).

3. The earring of claim 2, wherein the earring back (22) further includes a printed circuit board (41) accommodated in the housing (221), and
wherein the flexible conductor (42) and the wireless communication circuitry (222) are disposed on the printed circuit board (41).

4. The earring of claim 2 or 3, wherein the earring back (22) includes a pin hole (PH) through which the pin (211) passes, and
wherein the earring back (22) is configured to be reversibly fastened to the pin (211).

5. The earring of claim 1, wherein the first conductive pattern (201) includes a pin (211) configured to pass through a piercing of an ear (31) of a user, and a conductive member (212) extending from the pin (211),
wherein the earring back (22) includes a housing (221), an elastic member (830) disposed in the housing (221) and elastically fastened to the pin (211), and a printed circuit board (41) accommodated in the housing (221), and
wherein the pin (211) is a pogo pin configured to be brought into physical contact with a conductive terminal (412) disposed on the printed circuit board (41).

6. The earring of any one of claims 1 to 5, wherein the earring back (22) further includes a second conductive pattern (202),
wherein, while the accessory (21) and the earring back (22) are connected, the wireless communication circuitry (222) is configured to transmit and/or receive a signal in the at least one predetermined frequency band through the first conductive pattern (201) and the second conductive pattern (202), and
wherein, while the accessory (21) and the earring back (22) are separated, the wireless communication circuitry (222) is configured to transmit and/or receive a signal in the at least one predetermined frequency band through the second conductive pattern (202).

7. The earring of claim 6, wherein the first conductive pattern (201) includes a pin (211) configured to pass through a piercing of an ear (31) of a user, and a conductive member (212) extending from the pin (211),
wherein the earring back (22) further includes a housing (221) and a flexible conductor (42) accommodated in the housing (221) and elastically fastened to the pin (211), and
wherein the second conductive pattern (202) includes the flexible conductor (42).

8. The earring of claim 7, wherein the second conductive pattern (202) further includes at least one conductive portion positioned in the earring back (22) and electrically connected to the flexible conductor (42).

9. The earring of claim 8, wherein the at least one conductive portion includes a PCB embedded antenna (PEA).

10. The earring of claim 8, wherein the at least one conductive portion is formed through laser direct structuring (LDS).

11. The earring of claim 1, further comprising:
a matching circuit accommodated in the earring back (22) and electrically connected to the wireless communication circuitry (222).

12. The earring of any one of claims 1 to 11, wherein the at least one predetermined frequency band includes a frequency band for Bluetooth communication and/or a frequency band for Wi-Fi communication.

13. The earring of any one of claims 1 to 12, wherein the accessory (21) further includes a non-conductive member (1211) disposed on the first conductive pattern (201),
wherein the first conductive pattern (201) has an electrical length corresponding to a wavelength of the signal, and
wherein the non-conductive member (1211) has a dielectric constant corresponding to the electrical length.

14. The earring of any one of claims 1 to 13, further comprising:
a battery (44) accommodated in the earring back (22) and electrically connected to the wireless communication circuitry (222).

15. The earring of claim 1, wherein the earring back (22) is rotatably connected to a first end of the accessory (21),
wherein the earring (2) includes a support (1701) positioned at a second end of the accessory (21), and
wherein, in a state in which the earring (2) is worn on an ear (31) of a user, the earring back (22) is positioned to face the support (1701) with the ear (31) interposed therebetween.
